# EUROPEAN PATENT SPECIFICATION

(11) **EP 3 931 404 B1**
(45) Date of publication and mention of the grant of the patent: **24.06.2026**
(21) Application number: 20707849.4
(22) Date of filing: 21.02.2020
(51) Int. Cl.: E03F 7/04, F16K 15/14

(54) **TRAP WITH REMOVABLE SILICONE FLAP**
GERUCHSVERSCHLUSS MIT EINER ABNEHMBAREN KLAPPE
CLAPET ANTI-ODEUR AMOVIBLE

(30) Priority: 25.02.2019 NL 2022630
(43) Date of publication of application: 05.01.2022
(73) Proprietor: Easy Sanitary Solutions B.V., 7575 BK Oldenzaal (NL)
(72) Inventor: KEIZERS, Jurgen Hendrik Peter Joseph, 7575 BK Oldenzaal (NL)
(74) Representative: Patentanwälte Ruff, Wilhelm, Beier, Dauster & Partner mbB
(86) International application number: PCT/NL2020/050108
(87) International publication number: WO 2020/175983

(56) References cited:
- GB-A- 1 162 001
- SE-B- 433 956
- US-A- 171 817

## Description

The invention relates to a stench trap according to the preamble of claim 1.

Such a stench trap is for instance known from SE 433956. In this stench trap the outlet opening is positioned higher than the feed opening, whereby water remains in the housing and presses the flexible flap closed. For a reliable seal a height difference is therefore however necessary between the outlet opening and the feed opening. The overall height of the stench trap is hereby considerable, and the stench trap is not suitable for arranging in for instance a covering floor of a sanitary space.

If the feed opening and the outlet opening were placed at the same height in the housing, no water will remain in the housing and there is no external force for pressing the flexible flap reliably against the feed opening. If after some time the flexible flap were to deform to some extent, the flap will at once no longer close properly in that the flap will not be pressed against the feed opening.

It is an object of the invention to reduce or even obviate the above stated drawbacks.

This object is achieved according to the invention with a stench trap according to claim 1.

Because the tangent of the surface progresses from vertical to horizontal from the first edge to the second edge, the flexible flap is curved. Since the flexible flap lies against the closing surface and covers the feed opening, the closing surface is thus also curved correspondingly.

Because of the curvature of the flexible flap from a vertical to a horizontal direction, the flexible flap will be pressed against the closing surface by the force of gravity and its own weight. The pressing force resulting from the force of gravity will here become increasingly greater from the first edge to the second edge.

Water which finds its way via the feed opening into the stench trap will moreover flow easily under the flexible flap, wherein the flexible flap will then lie on the water like a blanket.

It has further been found that, in the case of such a curvature of the flexible flap, the stench trap is better able to withstand a counterpressure from the outlet. In the stench trap according to SE 433956 the flexible flap will readily deform against the round feed opening in the case of a counterpressure, whereby folds are created in the flexible flap and a leak is formed. In the invention the feed opening is elongate owing to the curved closing surface, while the connection to the stench trap has a usual round cross-section. Owing to this elongate design, the flexible flap will lie in contact over a longer edge of the feed opening in the closing surface and thereby form folds less readily when the flexible flap is deformed by the counterpressure.

The flexible flap is preferably manufactured from silicone. Silicone has sufficient flexibility and additionally provides for a reliable seal on the closing surface.

The closing surface is preferably curved in the direction from the first edge to the second edge, and is straight perpendicularly thereof. The closing surface thus has a curvature in only one direction, whereby the flexible flap can be manufactured from a strip of flexible material in simple manner.

The flexible flap is further preferably rectangular.

In a preferred embodiment of the stench trap according to the invention the tangent of the surface of the flexible flap close to the first edge, perpendicularly of the first edge, forms an angle with the horizontal in the range of 20° to 90° during use, and preferably runs substantially vertically.

Because there is an angular difference in the range of 20° to 90° between the tangent of the surface of the flexible flap close to the first edge, perpendicularly of the first edge, and the tangent of the surface of the flexible flap close to the second edge, perpendicularly of the second edge, the flexible flap is arranged against the closing surface in a curved state, and thereby under tension, whereby the flexible flap will also keep covering the feed opening in the case of underpressure.

In the stench trap according to the invention the housing has a bottom, a wall standing upright along the periphery of the bottom, and an upper wall enclosed by the upper edge of the upright wall, and the feed opening and the outlet opening are arranged in the peripheral wall.

Such a housing with a bottom, peripheral wall and upper wall largely corresponds to existing stench traps, and can thus be worked with easily and in a familiar manner.

In the case of such a housing the tangent of the surface of the flexible flap close to the first edge, perpendicularly of the first edge, preferably runs substantially perpendicularly of the upper surface; and
the tangent of the surface of the flexible flap close to the second edge, perpendicularly of the second edge, runs substantially parallel to the upper surface.

In the stench trap according to the invention a closing cover is arranged in the access opening.

Via the closing cover the housing can be opened and the flexible flap can be removed for cleaning.

In the stench trap according to the invention a passage opening is arranged in the access opening, which passage opening debouches on the side of the closing surface lying opposite the side of the closing surface against which the flexible flap lies.

Via this passage opening in the access opening it is possible to gain access to the outlet pipes which run up to the feed opening, for instance in order to clean these outlet pipes.

In the stench trap according to the invention a tongue is arranged on the first edge of the flexible flap, wherein the normal vector of the tongue runs substantially parallel to the first edge of the flexible flap.

The tongue is thus positioned upright in the manner of a dorsal fin, whereby a user can easily grip and remove the tongue, and thereby the flexible flap.

A protrusion on which the tongue is mounted is arranged on the flexible flap, and the protrusion covers the passage opening.

In the stench trap according to the invention the first edge of the flexible flap is fastened to the cover, such that the flexible flap can be removed with the cover via the access opening.

Because the flexible flap can be removed from the stench trap together with the cover in this embodiment, the flexible flap can be cleaned in simple manner. It is hereby moreover possible to incorporate the stench trap in the ground at a random location since only the access to the cover need remain accessible in order to remove the flexible flap.

In a further preferred embodiment of the stench trap according to the invention an upright flange is provided around the access opening, wherein a connecting part is inserted with an end into the upright flange and wherein the cover is arranged on the other end of the connecting part.

Owing to the upright flange and the connecting part, it is possible to vary the height of the cover by shortening the connecting part to a desired length. It is thus possible to incorporate the stench trap in a covering floor and to position the cover at a height such that the cover lies flush with the upper surface of a finishing layer arranged on the covering floor.

The outer surface of the connecting part is preferably provided with a number of parallel peripheral grooves, wherein arranged in one of the peripheral grooves is a seal for sealing onto the upright flange.

The peripheral grooves provide a sawing aid during shortening of the connecting part. After shortening, the seal can then be placed in one of the remaining peripheral grooves for a reliable seal on the upright flange.

These and other features of the invention are further elucidated with reference to the accompanying drawings.
Figure 1 shows a perspective view of a first embodiment of a stench trap according to the invention with partially cut-away parts.
Figure 2 shows a cross-sectional view of the stench trap according to figure 1.
Figure 3 shows a cross-sectional view of the stench trap according to figure 1, wherein water flows through the stench trap.
Figure 4 shows a cross-sectional view of the stench trap according to figure 1, wherein the flexible flap has been removed.
Figure 5 shows a perspective view with exploded parts of a second embodiment of a stench trap according to the invention.
Figure 6 shows a perspective cross-sectional view of the stench trap according to figure 5.

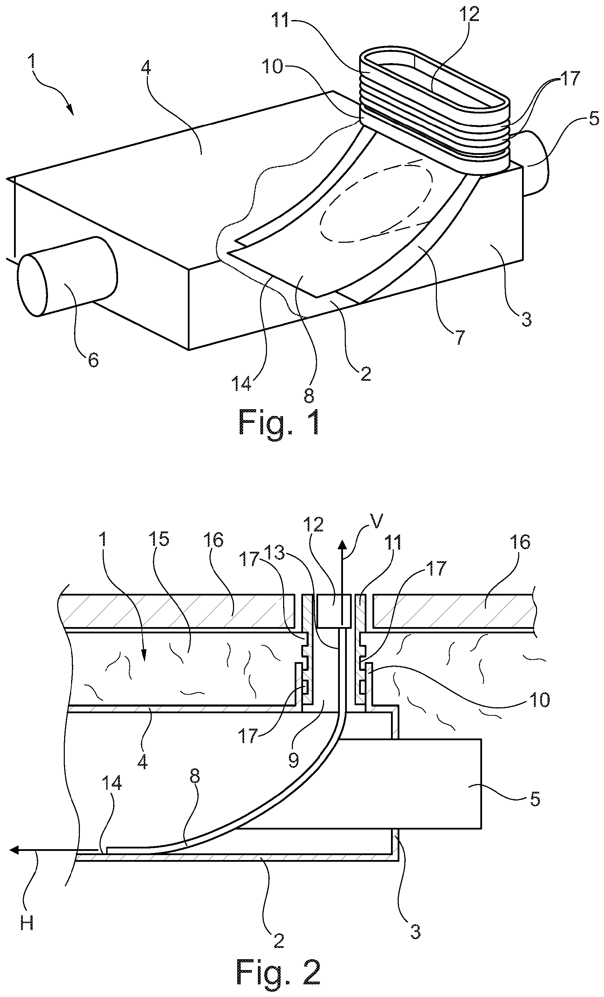

Figure 1 shows a stench trap 1 with a housing from a bottom 2, a peripheral wall 3 standing upright along the periphery of bottom 2, and an upper wall 4 enclosed by the upper edge of peripheral wall 3. A feed opening 5 and an outlet opening 6 are provided in peripheral wall 3.

Formed on the inner side of the housing, around feed opening 5, is a closing surface 7 against which a flexible flap 8, such as a silicone flap 8, lies for the purpose of closing feed opening 5.

An access opening 9 (see figure 2) is provided on upper wall 4. Arranged around access opening 9 is an upright flange 10, in which a connecting part 11 is arranged. Further placed in this connecting part 11 is a cover 12 to which the flexible flap 8 is fastened with a first edge 13. Relative to flexible flap 8, second edge 14 lies opposite first edge 13. Second edge 14 lies in a rest position on bottom 2 so that flexible flap 8 lies against the curved closing surface 7.

Figure 2 shows a cross-section of the stench trap 1 according to figure 1. Stench trap 1 is embedded in a covering floor 15, wherein connecting part 11 protrudes above covering floor 15. A finishing layer in the form of tiles 16 is provided on covering floor 15, wherein the upper surface of tiles 16 lies flush with the upper surface of cover 12.

Connecting part 11 is provided with a number of parallel peripheral grooves 17. A seal, such as an O-ring, can be provided in the bottom peripheral groove 17 for the purpose of sealing connecting part 11 onto upright flange 10. This connecting part 11 can be shortened by sawing through connecting part 11 along a peripheral groove 17. The height of connecting part 11, and thereby the position of cover 12, can hereby be adjusted to the thickness of covering floor 15 and tile layer 16.

The tangent V of the surface of flexible flap 8 close to first edge 13 runs substantially vertically, while the tangent H of the surface of flexible flap 8 close to second edge 14 runs substantially horizontally.

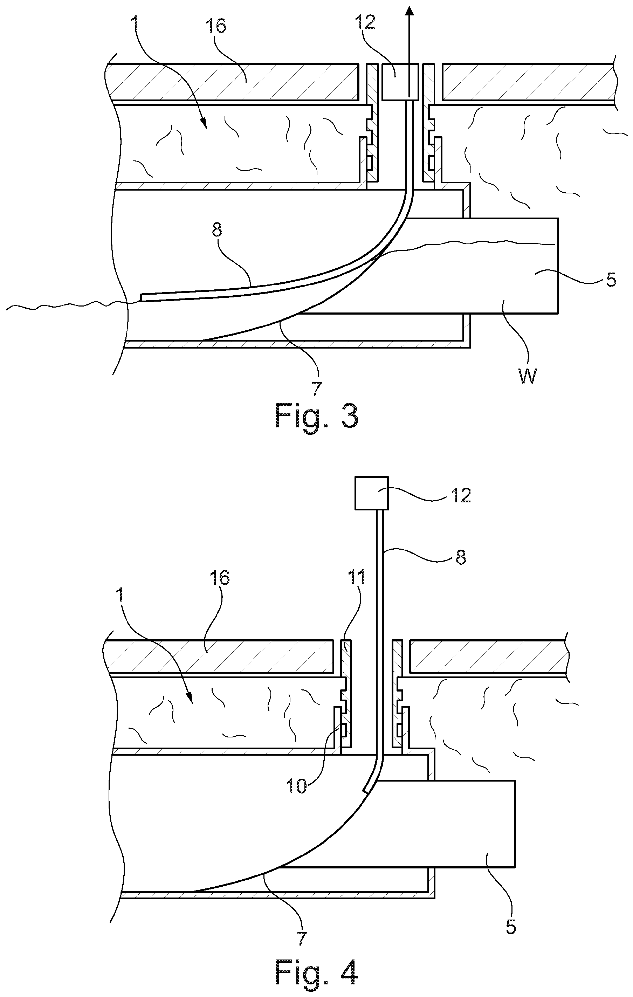

Figure 3 shows the stench trap 1, wherein water W is supplied via feed opening 5. The supplied water W presses flexible flap 8 partially up from closing surface 7 so that the water W flows under flexible flap 8 and to outlet opening 6. As soon as the water W has passed stench trap 1, flexible flap 8 will drop back onto closing surface 7 and close feed opening 5, as shown in figure 2.

Figure 4 shows the stench trap 1 according to the invention, wherein the cover 12 has been removed from connecting part 11. Flexible flap 8 is hereby likewise taken out of stench trap 1, so that flap 8 can be cleaned or replaced.

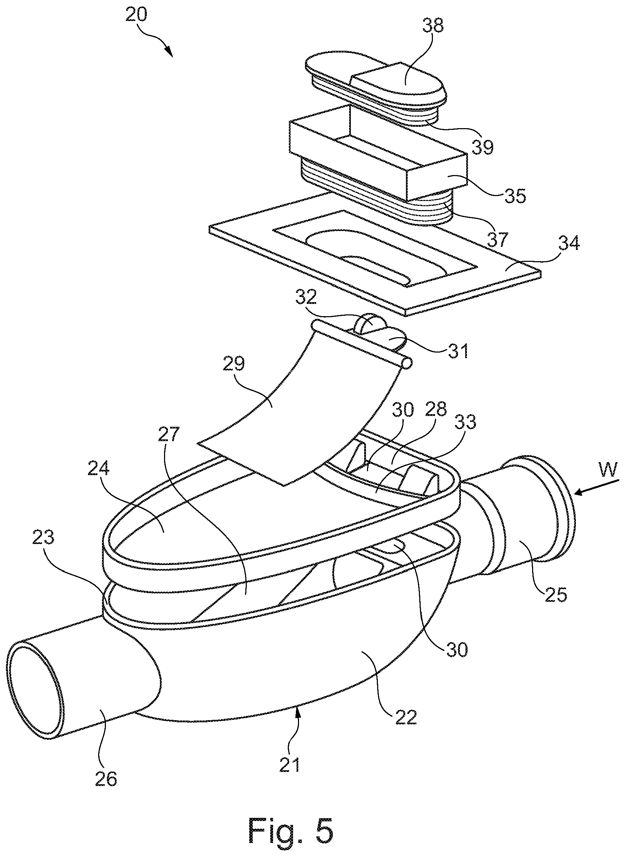

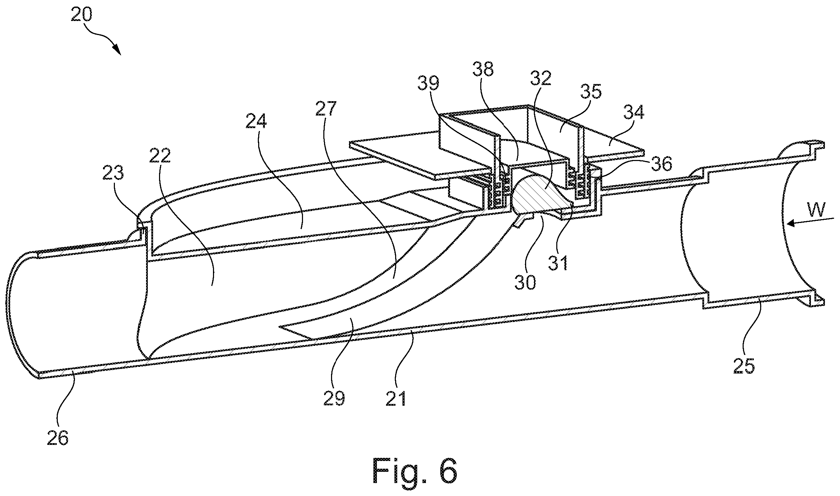

Figure 5 shows a perspective view with exploded parts of a second embodiment of a stench trap 20 according to the invention. Figure 6 shows here a perspective cross-sectional view of this stench trap 20.

Stench trap 20 has a housing from a bottom 21, a wall 22 standing upright along the periphery of bottom 21, and an upper wall 24 enclosed by the upper edge 23 of upright wall 22. Upper wall 24 is in this embodiment formed by a lid which is pressed into upright wall 22. After assembly, this lid is usually adhered or welded so that a further watertight housing is formed. A feed opening 25 and an outlet opening 26 are further arranged in upright wall 22.

A closing surface 27 is formed on the inner side of the housing. This closing surface 27 runs from upper wall 24 to bottom 21. Further provided in upper wall 24 is an access opening 28 along which a flexible flap 29 can be arranged in the housing and can be placed against closing surface 27.

A passage opening 30 is further provided in access opening 28 so that access can be gained to feed opening 25 from access opening 28. This passage opening 30 is usually closed by a protrusion 31 formed on flexible flap 29. Further arranged on this protrusion 31 is a tongue 32 whereby flexible flap 29 can be easily engaged and removed.

Provided around access opening 28 is an upright flange 33 in which a two-part connecting part 34, 35 is placed. Both parts of connecting part 34, 35 are provided with peripheral grooves 36, 37 in which an O-ring for sealing can be arranged and whereby the height of connecting part 34, 35 can be adjusted.

Finally, a closing cover 38, which closes access opening 28, is arranged in connecting part 34, 35. The closing cover 38 is for this purpose provided with peripheral grooves 39 in which an O-ring can likewise be placed for sealing.

## Claims

1. Stench trap (1; 20), comprising:
- a housing (2, 3, 4; 21, 22, 24) having a bottom (2; 21), an upright wall (3; 22) standing upright along a periphery of the bottom (2; 21), an upper wall (4; 24) enclosed by an upper edge of the upright wall (3; 22), and a feed opening (5; 25) and an outlet opening (6; 26) arranged in the upright wall (3; 22) wherein a closing surface (7; 27) is formed all around the feed opening (5; 25) on an inner side of the upright wall (3; 22); and
- a flexible flap (8; 29) which lies against the closing surface (7; 27) and covers the feed opening (5; 25);
**characterized in that**
- an access opening (9; 28) is arranged in the upper wall (4; 24) of the housing, and a closing cover (12; 38) is arranged in the access opening (9; 28);
- the flexible flap (8) has a first edge (13) arranged in the access opening (9; 28) and fastened to the closing cover (12) such that the flexible flap (8) can be removed with the cover (12) via the access opening (9),
or
the flexible flap (29) has a first edge (13) which is provided with a protrusion (31) arranged on the flexible flap (29) and with a tongue (32) mounted on the protrusion (31) for engagement and removal of the flexible flap (29), wherein the first edge (13) is arranged in the access opening (28) such that the protrusion (31) closes a passage opening (30) arranged in the access opening (28), wherein passage opening (30) debouches on the side of the closing surface (27) lying opposite the side of the closing surface (27) against which the flexible flap (29) lies; and
further **characterized in that**
- the flexible flap (8; 29) has a second edge (14), lying opposite the first edge (13), reaching to the bottom (2; 21) of the housing (2, 3, 4; 21, 22, 24), wherein a tangent (V) of a surface of the flexible flap (8; 29) close to the second edge (14), perpendicularly of the second edge (14), runs substantially horizontally during use and so lies in a rest position on the bottom (2; 21) of the housing.

2. Stench trap (1; 20) according to claim 1, wherein the closing surface (7; 27) is curved in the direction from the first edge (13) to the second edge (14), and is straight perpendicularly thereof.

3. Stench trap (1; 20) according to claim 1 or 2, wherein the flexible flap (8; 29) is rectangular.

4. Stench trap (1; 20) according to any one of the foregoing claims, wherein the tangent (V) of the surface of the flexible flap (8; 29) close to the first edge (13), perpendicularly of the first edge (13), forms an angle with the horizontal in the range of 20° to 90° during use.

5. Stench trap (1; 20) according to claim 4, wherein the tangent of the surface of the flexible flap close to the first edge, perpendicularly of the first edge, runs substantially vertically during use.

6. Stench trap (1; 20) according to claim 5, wherein
- the tangent (V) of the surface of the flexible flap (8; 29) close to the first edge (13), perpendicularly of the first edge (13), runs substantially perpendicularly of a surface of the upper edge of the upright wall; and
- wherein the tangent (V) of the surface of the flexible flap (8; 29) close to the second edge (14), perpendicularly of the second edge (14), runs substantially parallel to the surface of the upper edge of the upright wall.

7. Stench trap (20) according to any of claims 1 to 6, wherein a normal vector of the tongue (32) runs substantially parallel to the first edge of the flexible flap (29).

8. Stench trap (1; 20) according to any one of the claims 1 to 7, wherein an upright flange (10; 33) is provided around the access opening (9; 28), a connecting part (11; 34, 35) is inserted with an end into the upright flange (10; 33), and the closing cover (12; 38) is arranged on the other end of the connecting part (11; 34, 35).

9. Stench trap (1; 20) according to claim 8, wherein the outer surface of the connecting part (11; 34, 35) is provided with a number of parallel peripheral grooves (17; 36, 37), wherein arranged in one of the peripheral grooves (17; 36, 37) is a seal for sealing onto the upright flange (10; 33).

## Patentansprüche

1. Geruchsverschluss (1; 20) umfassend:
- ein Gehäuse (2, 3, 4; 21, 22, 24) mit einem Boden (2; 21), einer aufrechten Wand (3; 22), die sich aufrechtstehend entlang eines Umfangs des Bodens (2; 21) erstreckt, einer oberen Wand (4; 24), die von einer Oberkante der aufrechten Wand (3; 22) umgeben ist, und einer Zufuhröffnung (5; 25) sowie einer Auslassöffnung (6; 26), die in der aufrechten Wand (3; 22) angeordnet sind, wobei an einer Innenseite der aufrechten Wand (3; 22) eine Schließfläche (7; 27) um die gesamte Zufuhröffnung (5; 25) herum ausgebildet ist; und
- eine flexible Klappe (8; 29), die gegen die Schließfläche (7; 27) anliegt und die Zufuhröffnung (5; 25) bedeckt;
**dadurch gekennzeichnet, dass**
- eine Zugangsöffnung (9; 28) in der oberen Wand (4; 24) des Gehäuses angeordnet ist und eine Verschlussabdeckung (12; 38) in der Zugangsöffnung (9; 28) angeordnet ist;
- die flexible Klappe (8) eine in der Zugangsöffnung (9; 28) angeordnete erste Kante (13) aufweist und derart an der Verschlussabdeckung (12) befestigt ist, dass die flexible Klappe (8) mit der Abdeckung (12) über die Zugangsöffnung (9) herausnehmbar ist, oder die flexible Klappe (29) eine erste Kante (13) aufweist, die mit einem an der flexiblen Klappe (29) angeordneten Fortsatz (31) und mit einer Zunge (32) versehen ist, die zum Ergreifen und Herausnehmen der flexiblen Klappe (29) am Fortsatz (31) angebracht ist, wobei die erste Kante (13) derart in der Zugangsöffnung (28) angeordnet ist, dass der Fortsatz (31) eine in der Zugangsöffnung (28) befindliche Durchgangsöffnung (30) verschließt, wobei sich die Durchgangsöffnung (30) an derjenigen Seite der Verschlussfläche (27) erstreckt, die der Seite der Verschlussfläche (27) abgewandt ist, gegen welche die flexible Klappe (29) anliegt; und
weiter **dadurch gekennzeichnet, dass**
- die flexible Klappe (8; 29) eine zweite Kante (14) aufweist, die der ersten Kante (13) abgewandt ist und sich bis zum Boden (2; 21) des Gehäuses (2, 3, 4; 21, 22, 24) erstreckt, wobei eine Tangente (V) einer Fläche der flexiblen Klappe (8; 29) nächst der zweiten Kante (14) senkrecht zu der zweiten Kante (14) im Gebrauch im Wesentlichen horizontal verläuft und sich so in einer Ruheposition auf dem Boden (2; 21) des Gehäuses befindet.

2. Geruchsverschluss (1; 20) nach Anspruch 1, wobei die Schließfläche (7; 27) in Richtung von der ersten Kante (13) zu der zweiten Kante (14) gekrümmt verläuft und senkrecht dazu geradlinig verläuft.

3. Geruchsverschluss (1; 20) nach Anspruch 1 oder 2, wobei die flexible Klappe (8; 29) rechteckig ist.

4. Geruchsverschluss (1; 20) nach einem der vorhergehenden Ansprüche, wobei die Tangente (V) der Fläche der flexiblen Klappe (8; 29) nächst der ersten Kante (13) senkrecht zur ersten Kante (13) im Gebrauch einen Winkel zur Horizontalen im Bereich von 20° bis 90° bildet.

5. Geruchsverschluss (1; 20) nach Anspruch 4, wobei die Tangente der Fläche der flexiblen Klappe nächst der ersten Kante senkrecht zur ersten Kante im Gebrauch im Wesentlichen vertikal verläuft.

6. Geruchsverschluss (1; 20) nach Anspruch 5, wobei
- die Tangente (V) der Fläche der flexiblen Klappe (8; 29) nächst der ersten Kante (13) senkrecht zur ersten Kante (13) im Wesentlichen senkrecht zu einer Fläche der Oberkante der aufrechten Wand verläuft und
- die Tangente (V) der Fläche der flexiblen Klappe (8; 29) nächst der zweiten Kante (14) senkrecht zur zweiten Kante (14) im Wesentlichen parallel zur Fläche der Oberkante der aufrechten Wand verläuft.

7. Geruchsverschluss (20) nach einem der Ansprüche 1 bis 6, wobei ein Normalenvektor der Zunge (32) im Wesentlichen parallel zur ersten Kante der flexiblen Klappe (29) verläuft.

8. Geruchsverschluss (1; 20) nach einem der Ansprüche 1 bis 7, wobei ein aufrechter Flansch (10; 33) um die Zugangsöffnung (9; 28) herum vorgesehen ist, ein Verbindungsteil (11; 34, 35) mit einem Ende in den aufrechten Flansch (10; 33) eingefügt ist und die Verschlussabdeckung (12; 38) am anderen Ende des Verbindungsteils (11; 34, 35) angeordnet ist.

9. Geruchsverschluss (1; 20) nach Anspruch 8, wobei eine Außenfläche des Verbindungsteils (11; 34, 35) mit einer Anzahl paralleler Umfangsnuten (17; 36, 37) versehen ist, wobei in einer der Umfangsnuten (17; 36, 37) eine Dichtung zur Abdichtung gegen den aufrechten Flansch (10; 33) angeordnet ist.

## Revendications

1. Siphon (1 ; 20), comprenant :
- un boîtier (2, 3, 4 ; 21, 22, 24) comportant un fond (2 ; 21), une paroi verticale (3 ; 22) se tenant verticalement le long d'une périphérie du fond (2 ; 21), une paroi supérieure (4 ; 24) entourée par un bord supérieur de la paroi verticale (3 ; 22), et une ouverture d'alimentation (5 ; 25) et une ouverture de sortie (6 ; 26) disposées dans la paroi verticale (3 ; 22), une surface de fermeture (7 ; 27) étant formée tout autour de l'ouverture d'alimentation (5 ; 25) sur un côté intérieur de la paroi verticale (3 ; 22) ; et
- un volet souple (8 ; 29) qui repose contre la surface de fermeture (7 ; 27) et recouvre l'ouverture d'alimentation (5 ; 25) ;
**caractérisé en ce que**
- une ouverture d'accès (9 ; 28) est pratiquée dans la paroi supérieure (4 ; 24) du boîtier, et un couvercle de fermeture (12 ; 38) est disposé dans l'ouverture d'accès (9 ; 28) ;
- le volet souple (8) comporte un premier bord (13) disposé dans l'ouverture d'accès (9 ; 28) et fixé sur le couvercle de fermeture (12) de sorte que le volet souple (8) puisse être retiré avec le couvercle (12) par l'intermédiaire de l'ouverture d'accès (9), ou le volet souple (29) présente un premier bord (13) qui est pourvu d'une saillie (31) disposée sur le volet souple (29) et d'une languette (32) montée sur la saillie (31) pour la mise en prise et le retrait du volet souple (29), le premier bord (13) étant disposé dans l'ouverture d'accès (28) de sorte que la saillie (31) ferme une ouverture de passage (30) située dans l'ouverture d'accès (28), l'ouverture de passage (30) débouchant sur le côté de la surface de fermeture (27) opposé au côté de la surface de fermeture (27) contre lequel repose le volet souple (29) ; et **caractérisé en ce que**
- le volet souple (8 ; 29) comporte un second bord (14), opposé au premier bord (13), atteignant le fond (2 ; 21) du boîtier (2, 3, 4 ; 21, 22, 24), une tangente (V) d'une surface du volet souple (8 ; 29) proche du second bord (14), perpendiculaire au second bord (14), s'étend sensiblement horizontalement pendant l'utilisation et se trouve ainsi dans une position de repos sur le fond (2 ; 21) du boîtier.

2. Siphon (1 ; 20) selon la revendication 1, la surface de fermeture (7 ; 27) étant incurvée dans la direction allant du premier bord (13) au second bord (14), et étant droite perpendiculairement à celui-ci.

3. Siphon (1 ; 20) selon la revendication 1 ou 2, le volet souple (8 ; 29) étant rectangulaire.

4. Siphon (1 ; 20) selon l'une quelconque des revendications précédentes, la tangente (V) de la surface du volet souple (8 ; 29) proche du premier bord (13), perpendiculairement au premier bord (13), formant un angle avec l'horizontale dans la plage de 20° à 90° pendant l'utilisation.

5. Siphon (1 ; 20) selon la revendication 4, la tangente de la surface du volet souple proche du premier bord, perpendiculairement au premier bord, s'étendant sensiblement verticalement pendant l'utilisation.

6. Siphon (1 ; 20) selon la revendication 5,
- la tangente (V) de la surface du volet souple (8 ; 29) proche du premier bord (13), perpendiculairement au premier bord (13), s'étendant sensiblement perpendiculairement à une surface du bord supérieur de la paroi verticale ; et
- la tangente (V) de la surface du volet souple (8 ; 29) proche du second bord (14), perpendiculairement au second bord (14), s'étendant sensiblement parallèlement à la surface du bord supérieur de la paroi verticale.

7. Siphon (20) selon l'une quelconque des revendications 1 à 6,
un vecteur normal de la languette (32) s'étendant sensiblement parallèlement au premier bord du volet souple (29).

8. Siphon (1 ; 20) selon l'une quelconque des revendications 1 à 7,
une bride verticale (10 ; 33) étant fournie autour de l'ouverture d'accès (9 ; 28), une partie de raccordement (11 ; 34, 35) étant insérée avec une extrémité dans la bride verticale (10 ; 33), et le couvercle de fermeture (12 ; 38) étant disposé sur l'autre extrémité de la partie de raccordement (11 ; 34, 35).

9. Siphon (1 ; 20) selon la revendication 8,
la surface extérieure de la partie de raccordement (11 ; 34, 35) étant pourvue d'un certain nombre de rainures périphériques parallèles (17 ; 36, 37), un joint d'étanchéité étant disposé dans l'une des rainures périphériques (17 ; 36, 37) pour assurer l'étanchéité sur la bride verticale (10 ; 33).
